# EUROPÄISCHE PATENTSCHRIFT

(11) **EP 4 466 084 B1**
(45) Veröffentlichungstag und Bekanntmachung des Hinweises auf die Patenterteilung: **16.07.2025**
(21) Anmeldenummer: 24718425.2
(22) Anmeldetag: 08.04.2024
(51) Int. Cl.: B01D 45/12, B01D 46/00, B01D 46/12, B01D 46/52, B01D 46/62, B01D 50/20

(54) **REINIGUNGSVORRICHTUNG FÜR ABLUFT EINER EINRICHTUNG ZUR BEARBEITUNG VON METALL UND NICHTMETALL ENTHALTENDEN WERKSTOFFVERBUNDWERKSTÜCKEN**
CLEANING DEVICE FOR EXHAUST AIR OF A DEVICE FOR PROCESSING COMPOSITE WORKPIECES CONTAINING METAL AND NON-METAL MATERIALS
DISPOSITIF DE PURIFICATION DE L'AIR D'ÉCHAPPEMENT D'UNE INSTALLATION D'USINAGE DE PIÈCES COMPOSITES CONTENANT DES MÉTAUX ET DES NON-MÉTAUX

(30) Priorität: 14.04.2023 DE 102023109421
(43) Veröffentlichungstag der Anmeldung: 27.11.2024
(73) Patentinhaber: Uniflex-Hydraulik GmbH, 61184 Karben (DE)
(72) Erfinder: SCHNELL, Alexander, 61209 Echzell (DE); BAUMGARTNER, Carsten, 35321 Laubach (DE); STICKER, Patrick, 61118 Bad Vilbel (DE)
(74) Vertreter: Grättinger Möhring von Poschinger Patentanwälte Partnerschaft mbB
(86) Internationale Anmeldenummer: PCT/EP2024/059523
(87) Internationale Veröffentlichungsnummer: WO 2024/213521

(56) Entgegenhaltungen:
- EP-A1- 1 671 571
- WO-A1-2019/098617
- DE-A1- 102018 118 536
- KR-A- 20220 100 141

## Beschreibung

Die vorliegende Erfindung betrifft eine Einrichtung zur Bearbeitung von Metall und Nichtmetall enthaltenden Werkstoffverbundwerkstücken, umfassend eine Maschine, welche der Bearbeitung solcher Werkstoffverbundwerkstücke dient und Metall und Nichtmetall enthaltende Späne oder sonstige Partikel absondert, und eine Absaug- und Reinigungsvorrichtung für mit derartigen Partikeln belastete Luft, wobei die Absaug- und Reinigungsvorrichtung ein Gebläse und, für eine mehrstufige Reinigung der partikelbelasteten Luft im Vollstrom in strömungstechnischer Abfolge durchströmt, eine Zyklon-Abscheidestufe, mindestens zwei mechanische Filterstufen und eine Aktivkohle-Filterstufe umfasst.

Beim Schneiden bzw. Trennen und sonstiger unter Bildung von Spänen bzw. Abrieb erfolgender mechanischer Bearbeitung von solchen Werkstoffverbundwerkstücken, welche Metall (z. B. Eisenmetall) sowie Nichtmetall (z. B. Kunststoff, Latex, Gummi oder dergleichen) enthalten oder daraus bestehen, entstehen typischerweise Dämpfe, Rauch und/oder Qualm. Die betreffende Dampf-, Rauch- bzw. Qualmbildung hängt häufig damit zusammen, dass bei der Bearbeitung des metallischen Werkstoffs vergleichsweise hohe Temperaturen entstehen, so dass die sich bildenden Späne häufig sogar glühen. Bei den entsprechenden Temperaturen verdampft/verbrennt der nichtmetallische Werkstoff, eben unter der Bildung von Dampf, Rauch und/oder Qualm. Wegen der vergleichsweise großen Oberfläche ist diese Entwicklung von Dampf, Rauch und/oder Qualm besonders intensiv, wenn nichtmetallische Anteile des Werkstoffs an den sich bei der Werkstück-Bearbeitung bildenden heißen bzw. ggf. glühenden Metall-Spänen anhaften und verdampfen.

Zum Schutz des Maschinenpersonals und anderer sich in der Nähe der jeweiligen Bearbeitungsmaschine aufhaltender Personen ist eine Ausbreitung des sich bildenden Dampfes, Rauchs bzw. Qualms unbedingt zu vermeiden. So sind die betreffenden Maschinen vielfach mit Abzugsanlagen ausgestattet, welche die mit Dampf, Rauch bzw. Qualm beladene Luft ins Freie befördern. Diese Praxis ist aber nicht nur als unmittelbare Umweltverschmutzung anzusehen und aus diesem Grunde fragwürdig. Sie ist auch energetisch nachteilig; denn über die abgesaugte Luft geht - falls nicht eine Wärmerückgewinnung erfolgt - Wärme verloren, so dass in dem betreffenden Betriebsgebäude entsprechend intensiv nachgeheizt werden muss.

Vor diesem Hintergrund gibt es Ansätze, die von der Maschine abgesaugte, mit Dampf, Rauch bzw. Qualm belastete sowie typischerweise zusätzlich (ggf. noch glühende) Metallspäne enthaltende Luft maschinennah einer Reinigung zu unterziehen und die so gereinigte Luft wieder in das Betriebsgebäude zu entlassen. Entsprechende Absaug- und Reinigungsvorrichtungen, wie sie bereits jetzt als Teil gattungsgemäßer Einrichtungen zur Bearbeitung von Metall und Nichtmetall enthaltenden Werkstoffverbundwerkstücken zum Einsatz kommen und somit als bekannt vorausgesetzt werden, gehören beispielsweise zum aktuellen Lieferprogramm der Anmelderin (Uniflex-Hydraulik GmbH, Karben). DE 10 2018 118536 A1, EP 1 671 571 A1, WO 2019/098617 A1 und KR 2022 0100141 A sind Dokumente aus dem Stand der Technik.

Die vorliegende Erfindung ist darauf gerichtet, zu einer weiteren Verbesserung der Arbeitsplatzhygiene bei gattungsgemäßen Einrichtungen zur Bearbeitung von Metall und Nichtmetall enthaltenden Werkstoffverbundwerkstücken sowie weiteren praxisrelevanten Verbesserungen gegenüber dem Stand der Technik beizutragen. Insbesondere geht es der Erfindung darum, die derzeit bestehende Situation im Hinblick auf die Gesamtheit an praxisrelevanten Anforderungen wie Luftqualität (im Sinne von Reinigungsleistung der Absaug- und Reinigungsvorrichtung), energetische Effizienz, Raumbedarf, Flexibilität der Absaug- und Reinigungsvorrichtung im Hinblick auf wechselnde Anforderungen, Lärmschutz und Wartungsaufwand zu verbessern, wobei die dargelegten Einzel-Zielsetzungen erkennbar teilweise in einem Konfliktverhältnis zueinander stehen.

Gelöst wird diese Aufgabenstellung gemäß der vorliegenden Erfindung, indem bei einer Einrichtung zur Bearbeitung von Metall und Nichtmetall enthaltenden Werkstoffverbundwerkstücken der gattungsgemäßen Art die Zyklon-Abscheidestufe mindestens ein Paket aus mindestens drei, bevorzugt mindestens sechs strömungstechnisch zueinander parallel geschalteten Einzelzyklonen aufweist, welche um einen sie über einen Verteilerstern beaufschlagenden Zulauf herum angeordnet sind, wobei die Einzelzyklone nach oben gerichtete Auslässe für die gereinigte Luft aufweisen, und dass oberhalb der Auslässe der Einzelzyklone eine erste der mechanischen Filterstufen den zugeordneten Zulauf umgreifend angeordnet ist. Für die erfindungsgemäße Einrichtung zur Bearbeitung von Metall und Nichtmetall enthaltenden Werkstoffverbundwerkstücken ist demnach, mit anderen Worten, insbesondere die folgende Kombination von Merkmalen, welche die Absaug- und Reinigungsvorrichtung auszeichnen und untereinander sowie mit den sonstigen technischen Merkmalen der Einrichtung zur Bearbeitung von Metall und Nichtmetall enthaltenden Werkstoffverbundwerkstücken synergistisch zusammenwirken, wesentlich:
- Die Zyklon-Abscheidestufe (bzw. mindestens eine Zyklon-Abscheidestufe) umfasst mindestens ein Paket aus mindestens drei, bevorzugt mindestens sechs strömungstechnisch zueinander parallel geschalteten Einzelzyklonen. Vorteilhafterweise sind die Einzelzyklone des betreffenden Pakets dabei nicht nur strömungstechnisch parallel geschaltet, sondern auch (in einer gemeinsamen Ebene) baulich parallel zueinander angeordnet.
- Die mindestens drei, bevorzugt mindestens sechs (besonders bevorzugt acht) Einzelzyklone des betreffenden Pakets sind dabei um einen (gemeinsamen) Zulauf herum angeordnet, der sie über einen Verteilerstern beaufschlagt, und weisen nach oben gerichtete Auslässe für die gereinigte Luft auf. Vorteilhafterweise sind die Einzelzyklone dabei in dem Sinne stehend, d. h. mit vertikaler oder zumindest im Wesentlichen vertikaler (z. B. um bis zu 30° gegenüber der Vertikalen geneigten) Achse angeordnet, so dass die gereinigte Luft den jeweiligen Einzelzyklon durch den jeweils zugeordneten Auslass mehr oder weniger vertikal nach oben gerichtet verlässt.
- Oberhalb der Auslässe der Einzelzyklone ist eine erste der mechanischen Filterstufen angeordnet. Diese erste mechanische Filterstufe, welche den dem betreffenden Paket aus Einzelzyklonen zugeordneten Zulauf umgreift, wird somit auf kürzestem Wege aus den Auslässen der Einzelzyklone heraus beaufschlagt. Idealerweise liegt dabei eine direkte und unmittelbare Beaufschlagung der ersten der der Zyklon-Abscheidestufe nachgelagerten mechanischen Filterstufen aus den Auslässen der Einzelzyklone vor, ohne vorherige Strömungsumlenkung.

Im Ergebnis ergeben sich durch die erfindungsgemäße Ausführung der Einrichtung zur Bearbeitung von Metall und Nichtmetall enthaltenden Werkstoffverbundwerkstücken diverse Vorteile von ausgesprochen hoher praktischer Relevanz. Durch die - verglichen mit einem Einzelzyklon vergleichbaren Luftdurchsatzes - vergrößerte Oberfläche der mindestens drei, bevorzugt mindestens sechs, besonders bevorzugt acht Einzelzyklone eines Pakets erfolgt mit höherer Zuverlässigkeit ein Verlöschen beim Eintritt in die Reinigungseinrichtung noch glühender Späne; dies reduziert die Gefahr einer Beschädigung nachgelagerter Filterstufen. Die durch die Ausgestaltung der Zyklon-Abscheidestufe und der ersten dieser nachgeschalteten mechanischen Filterstufe und die spezifische räumliche Anordnung dieser Komponenten relativ zueinander lässt sich, verglichen mit dem Stand der Technik, die Geräuschentwicklung substantiell reduzieren. Zudem tragen diese Merkmale dazu bei, dass die Absaug- und Reinigungseinrichtung - im Sinne einer hohen Einsatz-Flexibilität - auch bei in erheblichem Maße unterschiedlichen Luftdurchsätzen eine gleichermaßen hohe Reinigungsleistung und - trotz ihrer überragenden Leistungsfähigkeit - einen nur sehr geringen Raumbedarf besitzt. Die hohe Flexibilität wiederum ist mittelbar auch ein entscheidender Effizienz-Faktor; denn die hohe Reinigungsleistung auch im Teillastbereich erlaubt den Betrieb der Absaug- und Reinigungseinrichtung - ohne Einbuße der Wirksamkeit - mit reduziertem Luftdurchsatz, wodurch sich Betriebskosten einsparen und Wartungsintervalle verlängern lassen.

Gemäß einer ersten bevorzugten Weiterbildung der vorliegenden Erfindung umfasst die erste mechanische Filterstufe eine C-förmige, eine seitwärts gerichtete Aussparung aufweisende Filterscheibe, wobei die Aussparung der Filterscheibe den zugeordneten Zulauf aufnimmt. Durch die C-Form lässt sich die Filterscheibe leicht und problemlos - insbesondere ohne die Notwendigkeit einer Demontage des Zulaufs des zugeordneten Zyklon-Pakets - aus- und einbauen. Die Filterscheibe kann nämlich der Einbaulage seitwärts entnommen werden, wobei der Zulauf zur Seite hin aus der Aussparung der Filterscheibe heraustritt; das Einsetzen der Filterscheibe erfolgt in umgekehrter Reihenfolge. So ist die Wartung der ersten, typischerweise am stärksten belasteten mechanischen Filterstufe mit minimalem Aufwand möglich. Und die somit wirtschaftlich mögliche regelmäßige Wartung wirkt sich positiv auf die Wirksamkeit aus. In Anlehnung an die vorstehend erläuterte (C-förmige) Gestaltung der Filterscheibe ist die erste mechanische Filterstufe, in weiterhin bevorzugter Ausgestaltung der Erfindung, in einem Gehäuse untergebracht, welches seinerseits eine seitwärts gerichtete Aussparung aufweist, wobei die Aussparung des Gehäuses den zugeordneten Zulauf aufnimmt.

Eine andere bevorzugte Weiterbildung der erfindungsgemäßen Einrichtung zeichnet sich dadurch aus, dass die erste mechanische Filterstufe in einem Gehäuse untergebracht ist, welches benachbart zu einem Eintritt des zugeordneten Zulaufs obere Ausströmöffnungen sowie an seinem Umfang seitliche Ausströmöffnungen aufweist. Es hat sich gezeigt, dass die Bereitstellung von Ausströmöffnungen sowohl an der - dem Eintritt des zugeordneten Zulaufs zugeordneten - Stirnseite des Gehäuses als auch an dessen Umfang sowohl unter Gesichtspunkten einer minimalen Geräuschentwicklung als auch im Hinblick auf sehr gute Reinigungsergebnisse über einen breiten Betriebsbereich hinweg sehr günstig ist.

Gemäß einer wiederum anderen bevorzugten Weiterbildung der Erfindung umfasst die Absaug- und Reinigungsvorrichtung zwei nebeneinander angeordnete Kammern, wobei neben einer die Zyklon-Abscheidestufe und die erste mechanische Filterstufe aufnehmenden ersten Kammer eine zweite Kammer angeordnet ist, welche eine der ersten mechanischen Filterstufe strömungstechnisch nachgeschaltete zweite mechanische Filterstufe aufnimmt. Die beiden Kammern sind dabei vorteilhafterweise durch eine Trennwand bzw. ein Trenn- bzw. Leitblech voneinander getrennt, wobei dieses Blech bzw. diese Trennwand ersichtlich keine vollständige, sondern "nur" eine weitgehende Trennung der beiden Kammern voneinander bewirkt; denn es verbleibt bestimmungsgemäß ein Strömungsweg für die zu reinigende Luft von der ersten Kammer in die zweite Kammer. Die Trennwand bzw. das Trenn- bzw. Leitblech kann zu diesem Zweck insbesondere einen Durchbruch oder eine Aussparung aufweisen, an dessen bzw. deren Kante eine scharfe Strömungsumlenkung erfolgt. Idealerweise weist die zwischen der ersten Kammer und der zweiten Kammer angeordnete Trennwand (bzw. ein dort vorhandenes Trenn- bzw. Leitblech) eine umströmte Kante mit einer mindestens 90° betragenden Strömungsumlenkung für die von der ersten in die zweite Kammer gelangenden Luftstrom auf. Dies begünstigt eine Abscheidung von mit dem Luftstrom aus der ersten mechanischen Filterstufe ausgetragenen Verunreinigungen auf dem Weg zur zweiten mechanischen Filterstufe.

Was die zweite mechanische Filterstufe angeht, so weist diese bevorzugt mindestens einen radial von außen nach innen durchströmten Topffilter mit nach oben weisendem Austritt auf. Der Luftstrom verlässt die zweite mechanische Filterstufe dabei bevorzugt mehr oder weniger vertikal nach oben gerichtet. Besonders bevorzugt sind mindestens zwei derartige Topffilter vorgesehen, und zwar in einer strömungstechnischen Parallelanordnung zueinander. Besonders bevorzugt ist dabei der mindestens eine Topffilter auf seiner Außenseite von einem Vorfiltermantel umgeben, wobei sich ein mehrlagiger Aufbau des Vorfiltermantels als ganz besonders günstig erwiesen hat. Besonders günstige Eigenschaften haben dabei Vorfiltermäntel mit mindestens einer aus einem Filtervlies bestehenden Lage und einer aus einem Filterschaum (z. B. aus PU-Schaum) bestehenden Lage. Die vorstehenden technischen Gesichtspunkte wirken sich insbesondere im Hinblick auf die (hohe) Reinigungsleistung, die (geringe) Geräuschentwicklung und den (geringen) Wartungsaufwand positiv aus.

Gemäß einer abermals anderen bevorzugten Weiterbildung der vorliegenden Erfindung erstreckt sich bei solchen Reinigungsvorrichtungen, welche - im vorstehenden Sinne - über eine erste und eine neben dieser angeordnete zweite Kammer verfügen, oberhalb der ersten und der zweiten Kammer eine der zweiten mechanischen Filterstufe strömungstechnisch nachgeschaltete dritte mechanische Filterstufe. Die Dritte mechanische Reinigungsstufe, welche bevorzugt wiederum mehr oder weniger vertikal von unten nach oben durchströmt ist, weist, weil sie sich oberhalb der ersten sowie der zweiten Kammer erstreckt, einen größeren Strömungsquerschnitt auf als die zweite mechanische Filterstufe. Dies resultiert in einer Reduktion der Strömungsgeschwindigkeit des zu reinigenden Luftstroms in Strömungsrichtung, was sich wiederum sehr vorteilhaft im Hinblick auf die Geräuschentwicklung der Reinigungsvorrichtung auswirkt, namentlich auf die Geräuschabstrahlung des die Reinigungsvorrichtung verlassenden Luftstroms.

Eine wiederum andere bevorzugte Weiterbildung der erfindungsgemäßen Einrichtung zur Bearbeitung von Metall und Nichtmetall enthaltenden Werkstoffverbundwerkstücken zeichnet sich dadurch aus, dass das Gebläse der Absaug- und Reinigungsvorrichtung einen Antriebsmotor umfasst, welcher in einem durch eine Wandung begrenzten Einbauraum untergebracht ist, wobei die Wandung den Motor-Einbauraum von einem mit Aktivkohle befüllten Raum des Aktivkohlefilters abtrennt. Bei dieser Weiterbildung ist, mit anderen Worten, der Motor-Einbauraum, in welchem der Antriebsmotor für das Gebläse untergebracht ist, mehr oder weniger in den Aktivkohlefilter eingebettet, nämlich zumindest teilweise von dem mit Aktivkohle befüllten Raum umgeben. Hierdurch ergeben sich erneut substantielle positive Auswirkungen in schalltechnischer Hinsicht; denn die Aktivkohle trägt zu einer aktiven, wirksamen Dämpfung des von dem Gebläse-Antriebsmotor abgestrahlten Schalls bei. Nachdem die Aktivkohle-Stufe stromabwärts des Gebläses, d. h. auf dessen Druckseite angeordnet ist, dämpft die Aktivkohle zudem wirksam den durch das - stromaufwärts der Aktivkohle-Stufe angeordnete - Gebläse selbst erzeugten Schall.

Schließlich ist, wiederum unter Gesichtspunkten einer besonders leichten Wartung, besonders bevorzugt unterhalb der Einzelzyklone eine Grobschmutzwanne angeordnet. Die Einzelzyklone können dabei die aus dem zu reinigenden Luftstrom abgeschiedenen Partikel allein mittels Schwerkraft in die Grobschmutzwanne hinein entleeren. Im Hinblick auf möglichst große Wartungsintervalle besitzt die Grobschmutzwanne vorzugsweise ein großes Fassungsvermögen und ist, um für eine leichte Wartung zu sorgen, mit Rollen ausgestattet. Besonders bevorzugt weist dabei ein Korpus der Absaug- und Reinigungsvorrichtung eine dem Anheben und Absenken der Grobschmutzwanne dienende Hubeinrichtung auf. Diese erlaubt, dass die Grobschmutzwanne sich leicht und bequem in eine von dem Boden abgehobene, den Schmutzfangraum zuverlässig dicht nach außen abschließende Betriebsposition bringen lässt. Die solchermaßen angehobene Grobschmutzwanne behindert nicht das Bewegen der Absaug- und Reinigungsvorrichtung, sofern diese ihrerseits im Einzelfall mobil ausgeführt, d. h. mit Rollen ausgestattet ist.

Im Folgenden wird die vorliegende Erfindung anhand eines in der Zeichnung veranschaulichten bevorzugten Ausführungsbeispiels näher erläutert. Dabei zeigt
- Fig. 1: eine Einrichtung zur Bearbeitung von Metall und Nichtmetall enthaltenden Werkstoffverbundwerkstücken mit einer als Schlauchtrennmaschine ausgeführten Maschine zur Bearbeitung von Metall und Nichtmetall enthaltenden Werkstoffverbundwerkstücken und einer Absaug- und Reinigungsvorrichtung für Luft, welche mit von der Schlauchtrennmaschine abgesonderten, Metall und Nichtmetall enthaltenden Spänen oder sonstigen Partikeln belastet ist,
- Fig. 2: die bei der Einrichtung nach Fig. 1 realisierte Luft-Absaug- und Reinigungsvorrichtung in Draufsicht auf die Ansaugseite,
- Fig. 3: einen Vertikalschnitt durch die Luft-Absaug- und Reinigungsvorrichtung nach Fig. 2 entlang der Linie III-III in Fig. 2,
- Fig. 4: einen Vertikalschnitt durch die Luft-Absaug- und Reinigungsvorrichtung nach den Figuren 2 und 3 in einer gegenüber Fig. 3 um 90° gedrehten Ebene, entlang der Linie IV-IV in Fig. 3,
- Fig. 5: die gemäß Fig. 3 geschnittene Luft-Absaug- und Reinigungsvorrichtung nach den Figuren 2 bis 4 in perspektivischer Ansicht schräg von oben,
- Fig. 6: die gemäß Fig. 4 geschnittene Luft-Absaug- und Reinigungsvorrichtung nach den Figuren 2 bis 5 in perspektivischer Ansicht schräg von unten und
- Fig. 7: die gemäß Fig. 4 geschnittene Luft-Absaug- und Reinigungsvorrichtung nach den Figuren 2 bis 5 in perspektivischer Ansicht schräg von oben; und
- Fig. 8: sowie
- Fig. 9: veranschaulichen in größerem Detail den Aufbau und die Funktionsweise der Hubeinrichtung für die Grobschmutzwanne.

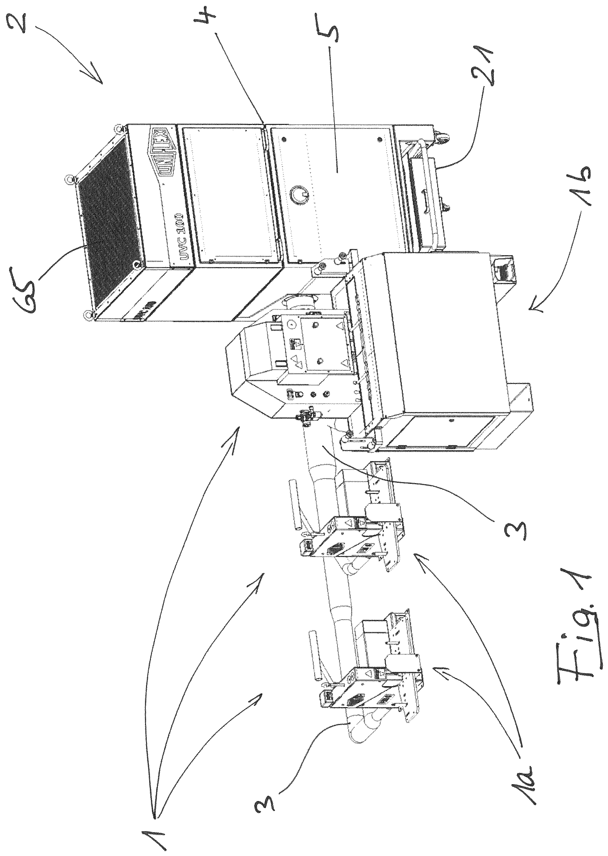

Die in Fig. 1 gezeigte Einrichtung zur Bearbeitung von Metall und Nichtmetall enthaltenden Werkstoffverbundwerkstücken umfasst mehrere der Bearbeitung solcher Werkstoffverbundwerkstücke dienende Maschinen 1, nämlich drei zum Durchtrennen von armierten Hochdruck-Hydraulikschläuchen bestimmte Schlauchtrennmaschinen 1a, 1b. Weiterhin umfasst die gezeigte Einrichtung eine Absaug- und Reinigungsvorrichtung 2 für Luft, welche mit von den Schlauchtrennmaschinen 1a, 1b abgesonderten, Metall und Nichtmetall enthaltenden Spänen oder sonstigen Partikeln belastet ist. Hierzu ist die Absaug- und Reinigungsvorrichtung 2 mit den drei Schlauchtrennmaschinen 1a, 1b über Absaugleitungen 3 verbunden.

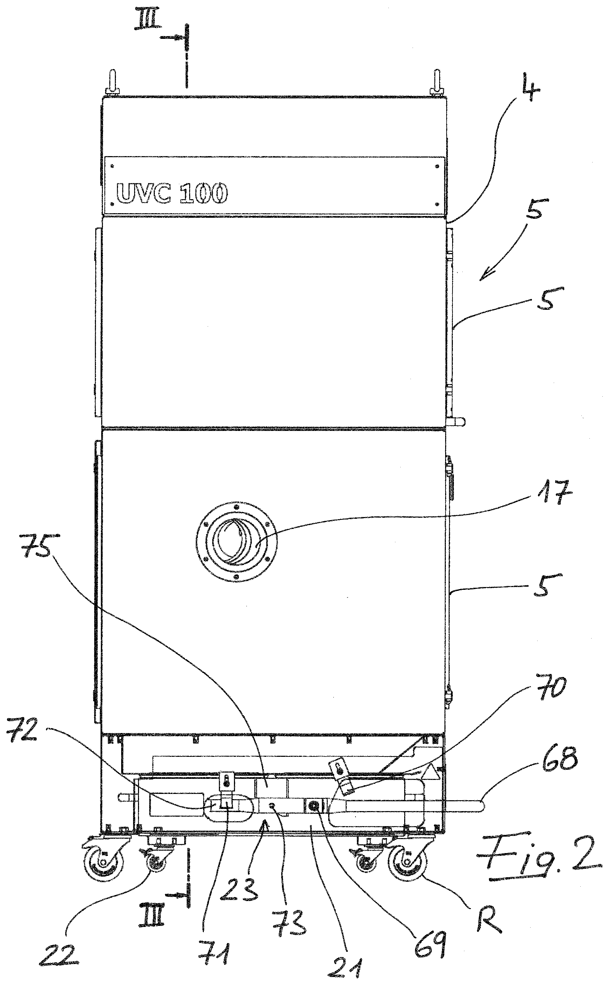

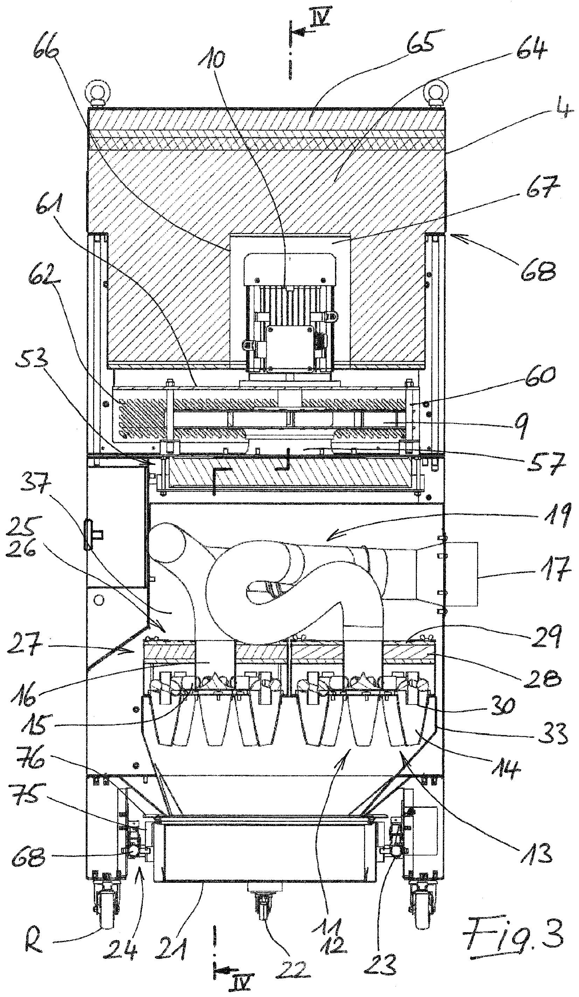

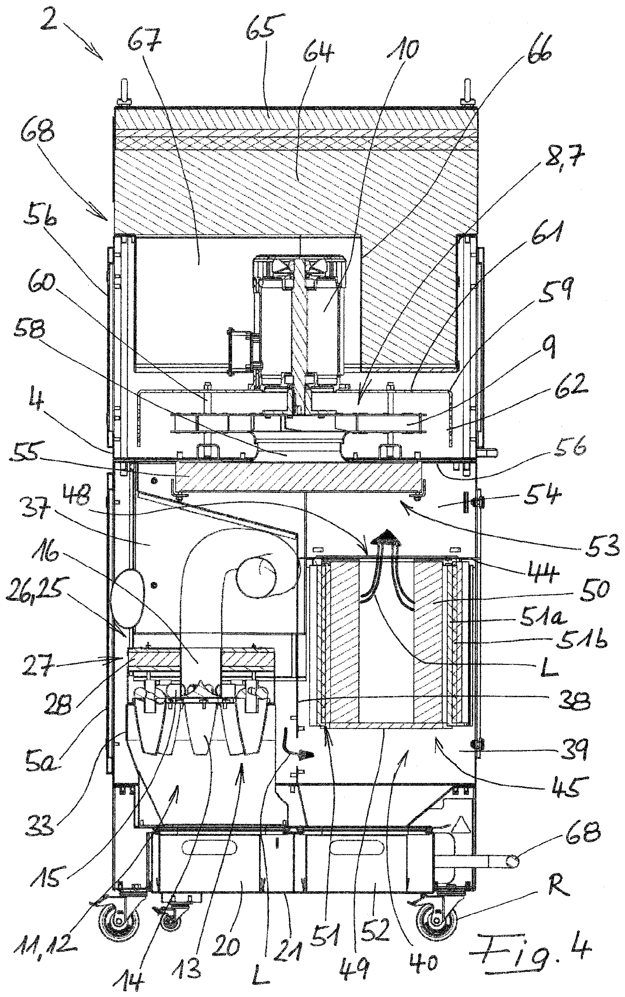

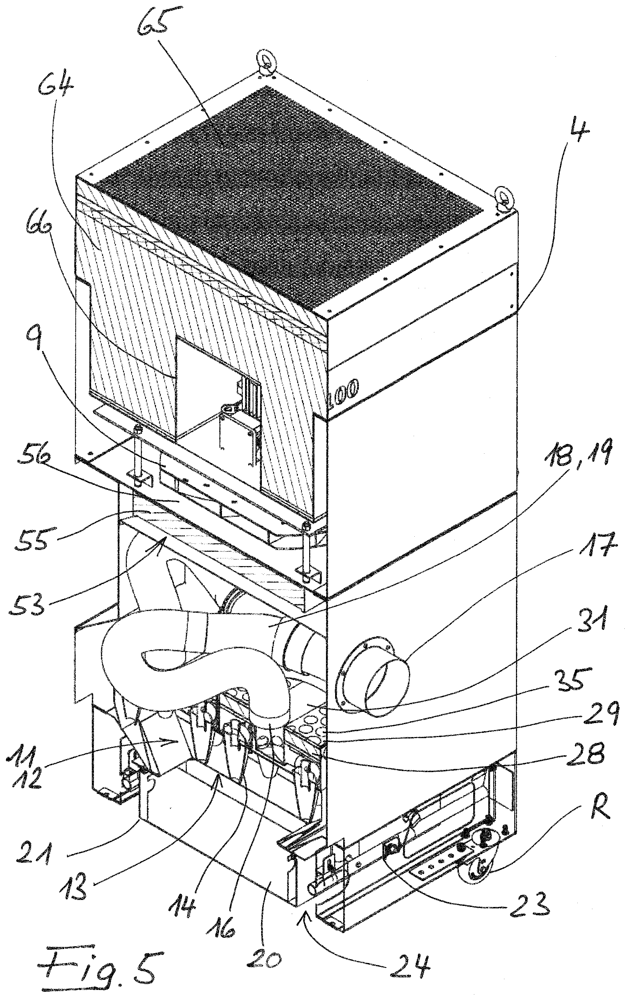

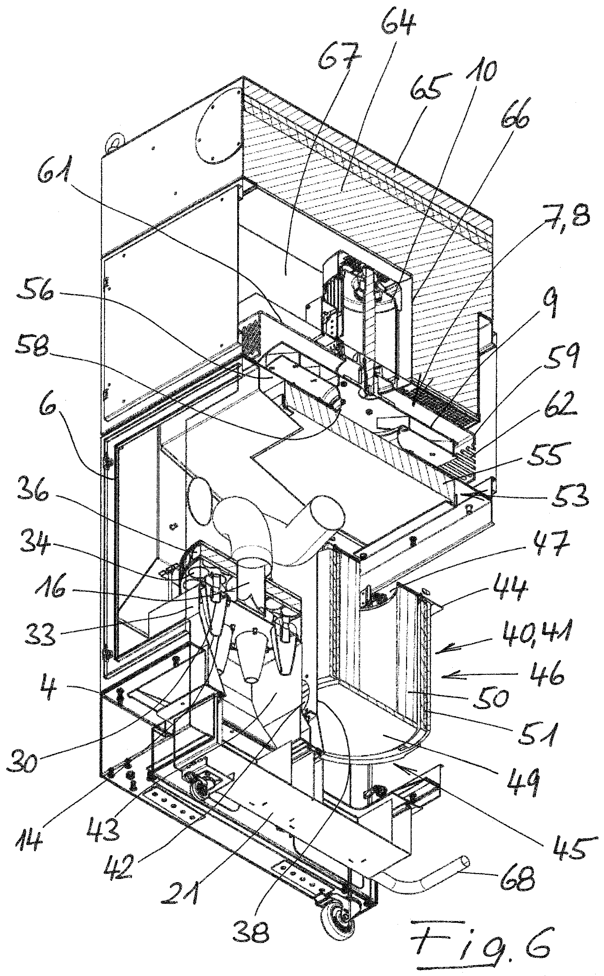

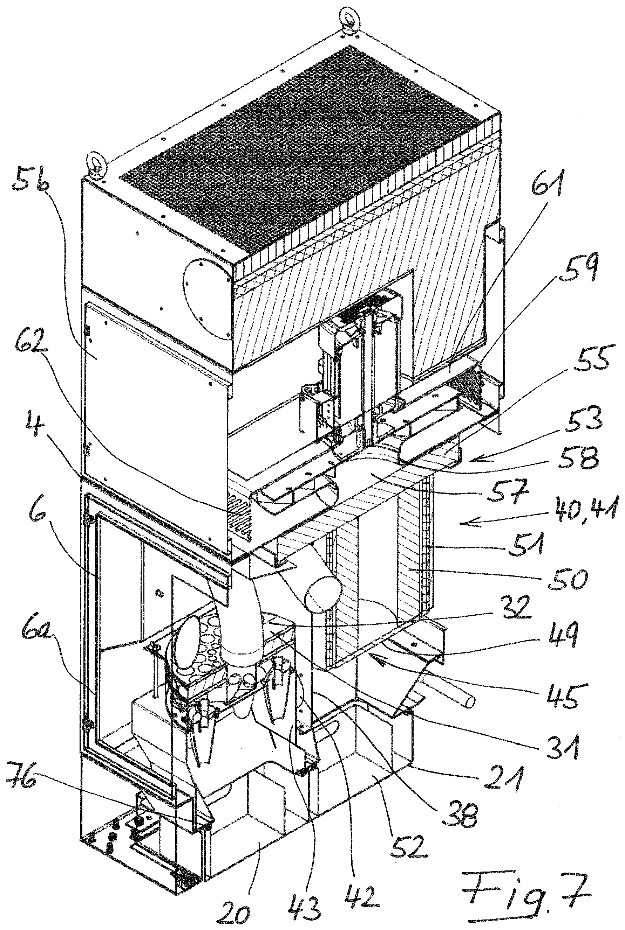

Die in den Figuren 2 bis 7 im Detail gezeigte Luft-Absaug- und Reinigungsvorrichtung 2 hat eine etwa kubische bzw. quaderförmige Grundform. Sie umfasst einen - auf Rädern R stehenden - gehäuseartigen Korpus 4 mit mehreren - mittels Deckeln 5 verschlossenen - Wartungsöffnungen 6, durch welche hindurch die verschiedenen Aggregate - insbesondere zu Wartungszwecken - zugänglich sind. Die Absaugung der Luft von den Schlauchtrennmaschinen 1a, 1b und Förderung der abgesaugten Luft durch fünf Reinigungsstufen (s. u.) wird dabei durch ein Gebläse 7 besorgt, welches als Radialgebläse 8 ausgeführt ist, wobei das Lüfterrad 9 durch den zugeordneten, oberhalb des Lüfterrades 9 angeordneten Motor 10 um die stehende Achse herum rotierend angetrieben wird.

Der durch die Luft-Absaug- und Reinigungsvorrichtung hindurch geförderte Luftstrom L durchströmt im Vollstrom in strömungstechnischer Abfolge insgesamt fünf Reinigungsstufen. Davon sind vier stromaufwärts des Gebläses 7, auf dessen Saugseite angeordnet und eine stromabwärts des Gebläses 7, auf dessen Druckseite.

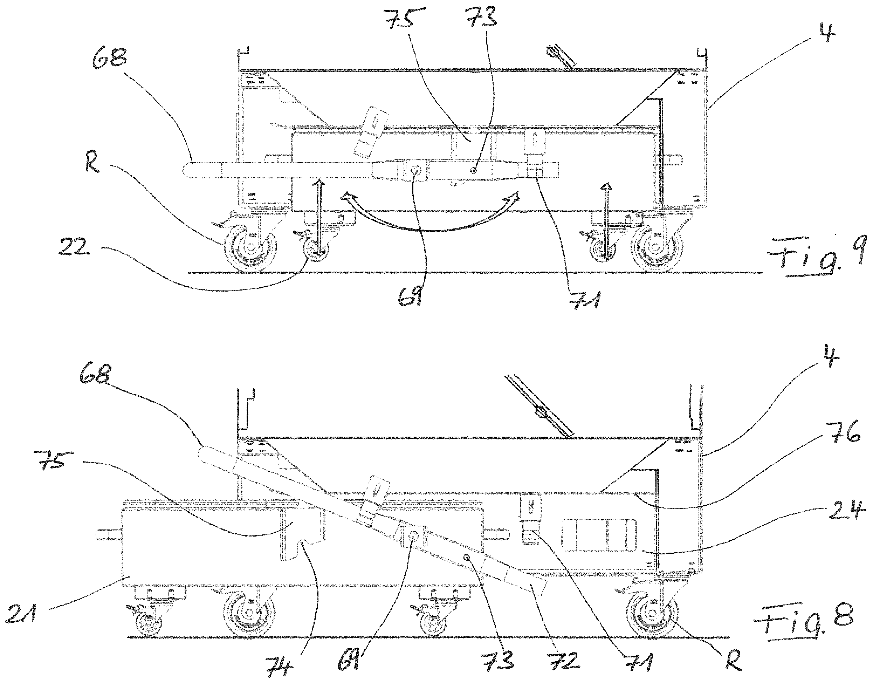

Die erste Reinigungsstufe 11 ist dabei als eine Zyklon-Abscheidestufe 12 ausgeführt. Sie umfasst zwei zueinander strömungstechnisch parallel geschaltete Pakete 13 aus jeweils acht strömungstechnisch zueinander parallel geschalteten Einzelzyklonen 14. Bei jedem der beiden Pakete 13 sind die acht Einzelzyklone 14 um einen sie über einen Verteilerstern 15 beaufschlagenden Zulauf 16 herum angeordnet, wobei die beiden Zuläufe 16 von dem Ansaugstutzen 17 her über eine als Hosenrohr 18 ausgeführte Verzweigung 19 beaufschlagt werden. Unterhalb der Einzelzyklone 14 ist ein erstes Fach 20 einer Grobschmutzwanne 21 angeordnet. Diese ist, für eine erleichterte Handhabung, schubladenartig ausgeführt und mit Rollen 22 ausgestattet, wobei zwischen dem Korpus 4 der Absaug- und Reinigungsvorrichtung 2 und der Grobschmutzwanne 21 eine dem Anheben und Absenken der Grobschmutzwanne 21 dienende Hubeinrichtung 23 (vgl. auch Figuren 8 und 9) wirkt. In der - in den Figuren 1-7 und 9 gezeigten - Betriebsposition der in einen entsprechenden Freiraum 24 des Korpus' 4 der Absaug- und Reinigungsvorrichtung 2 eingefahrenen Grobschmutzwanne 21 sind deren Rollen 22 somit von dem Boden abgehoben.

Die zweite Reinigungsstufe 25 ist als unmittelbar oberhalb der vorstehend beschriebenen ersten Reinigungsstufe 11 angeordnete erste mechanische Filterstufe 26 ausgeführt. Und zwar ist oberhalb jedes der beiden Einzelzyklon-Pakete 13 ein Filterelement 27 vorgesehen, welches eine - seitlich eingeschnittene, d. h. C-förmig ausgeführte - Filterscheibe 28 mit einem diese - an den beiden Stirnseiten sowie am Umfang - umgebenden, gelochten Gehäuse 29 umfasst und direkt von unten her mit Luft angeströmt wird, die die zugeordneten Einzelzyklone 14 durch deren nach oben gerichtete Tauchrohre 30 ("Auslässe") verlässt. Jedes Filterelement 27 umgreift den Zulauf 16 des zugeordneten Einzelzyklon-Pakets 13, indem dieser (samt des daran angebrachten Füllstücks 31) in der seitwärts gerichteten Aussparung 32 des betreffenden C-förmigen Filterelements 27 aufgenommen ist. So kann das C-förmige Filterelement zu Wartungszwecken seitwärts aus seiner Einbaulage abgezogen bzw. in diese eingesetzt werden, ohne dass eine weitergehende Demontage der Luft-Absaug- und Reinigungsvorrichtung 2 erforderlich wäre, wobei der Korpus 4 zum Zwecke des entsprechenden Filterwechsels eine - durch einen Deckel 5a verschließbare - Wartungsöffnung 6a aufweist. Die Filterscheibe 28 ist dreilagig aufgebaut und besteht sandwichartig aus einer zentralen Schaum-Lage und zwei diese einfassenden Vlies-Lagen. Durch seine Lochung weist das - dicht auf dem (nach unten zur Grobschmutzwanne 21 hin offenen) Gehäuse 33 des zugeordneten Einzelzyklon-Pakets 13 aufsitzende - Gehäuse 29 des Filterelements 27 untere Einströmöffnungen 34 und obere Ausströmöffnungen 35 sowie - an seinem Umfang - seitliche Ausströmöffnungen 36 auf.

Die in der ersten mechanischen Filterstufe 26 gereinigte, das jeweilige Filterelement 27 durch die genannten Ausströmöffnungen 35, 36 verlassende Luft gelangt in den von Einbauten freien Bereich einer - die Zyklon-Abscheidestufe 12 und die erste mechanische Filterstufe 26 aufnehmenden - ersten Kammer 37, welche durch eine Trennwand 38 von einer daneben liegenden zweiten Kammer 39 abgegrenzt ist, in welcher eine - der ersten mechanischen Filterstufe 26 strömungstechnisch nachgeschaltete - zweite mechanische Filterstufe 40 untergebracht ist, welche die dritte Reinigungsstufe 41 bildet. Die zweite Kammer 39 ist dabei mit der ersten Kammer 37 durch im unteren Bereich der Trennwand 38 angeordnete Durchströmöffnungen 42 verbunden. Dabei erfolgt durch ein dem Gehäuse 33 des Einzelzyklon-Pakets 13 zugehöriges Leitblech 43 eine solche Luftführung, dass im oberen Bereich der die Durchströmöffnung 42 begrenzenden, umströmten Kante eine abrupte Strömungsumlenkung des von der ersten Kammer 37 in die zweite Kammer 39 gelangenden Luftstrom erfolgt.

Die zweite mechanische Filterstufe 40 weist zwei - an der die zweite Kammer 39 nach oben hin begrenzenden Abschlusswand 44 angebrachte - Topffilter 45 mit jeweils einer radial von außen nach innen durchströmten zylindrischen Filtereinheit 46 und einem nach oben weisenden, zu einem korrespondierenden Durchbruch 47 der Abschlusswand 44 fluchtenden Austritt 48 auf. Die jeweilige Filtereinheit 46 umfasst dabei ein aus Polyesterfaser-Filtergewebe bestehendes zylindrisches Filterelement 50 ("cartridge filter"), welches in einem zylindrischen, perforierten, an seinem unteren Ende durch einen Deckel 49 verschlossenen Stahlblechgehäuse aufgenommen ist, sowie einen dieses außen umgebenden, leicht auswechselbaren zweilagigen Vorfiltermantel 51 mit einer aus einem Filtervlies bestehenden inneren Lage 51a (z. B. M5 Filtermatte) und einer aus einem offenporigem Filterschaum (z. B. PPI 15) bestehenden äußeren Lage 51b. Unterhalb der zweiten mechanischen Filterstufe befindet sich ein zweites Fach 52 der Grobschmutzwanne 21. Das zweite Fach 52 ist, ebenso wie das erste Fach 20, als in der Grobschmutzwanne 21 aufgenommener gesonderter Einsatz ausgeführt, was der raschen und einfachen Entleerung entgegenkommt.

Die aus den beiden Topffiltern 45 der zweiten mechanischen Filterstufe 40 nach oben abströmende Luft gelangt zu der dritten mechanischen Filterstufe 53. Diese umfasst ein in einer - sich oberhalb der ersten Kammer 37 und der zweiten Kammer 39 erstreckenden - dritten Kammer 54 angeordnetes, von unten nach oben durchströmtes, rechteckiges plattenförmiges HEPA-Filterelement 55. Dieses ist großflächig oberhalb der ersten und der zweiten mechanischen Filterstufe 26, 40 an der Unterseite eines Trennblechs 56 angeordnet, welches die dritte Kammer 54 nach oben hin begrenzt und einen oberen Bereich der Absaug- und Reinigungsvorrichtung 2 von einem - die erste, die zweite und die dritte Kammer 37, 39, 54 umfassenden - unteren Bereich abtrennt und eine zentrale Durchtrittsöffnung 57 aufweist, welche durch einen den Ansaugbereich des Radialgebläses 8 bildenden Kragen 58 begrenzt ist. Der das Lüfterrad 9 des Radialgebläses 8 antreibende Elektromotor 10 ist auf einem Strömungsleitblech 59 aufgebaut, welches - mittels mehrerer Bolzen 60 - an dem Trennblech 56 angebracht ist und zwei von einem - den Elektromotor 10 tragenden - oberen Abschnitt 61 nach unten abgewinkelt abstehende perforierte Seitenwände 62 aufweist. So umgreift das Strömungsleitblech 59 das Lüfterrad 9 und sorgt für eine Beruhigung der das Radialgebläse 8 verlassenden Luftströmung.

Den oberen Abschluss der Absaug- und Reinigungsvorrichtung 2 bildet als fünfte Reinigungsstufe 63 eine - sich über den gesamten Querschnitt des oberen Bereichs der Absaug- und Reinigungsvorrichtung 2 erstreckende - Aktivkohle-Filterstufe 68 mit einem Aktivkohlefilter 64 samt abströmseitiger mehrlagiger Abdeckung 65 aus Vlies und Schaumstoff. Der Antriebsmotor 10 des Radialgebläses 9 ist dabei in einem in dem Aktivkohlefilter 64 ausgesparten, durch eine Wandung 66 begrenzten Einbauraum 67 untergebracht, wobei die besagte Wandung 66 den Motor-Einbauraum 67 von einem mit Aktivkohle befüllten Raum des Aktivkohlefilters 64 abtrennt. Der Motor 10 ist durch eine mittels eines Deckels 5b verschließbare Wartungsöffnung 6b hindurch zugänglich.

Die Hubeinrichtung 23 für die Grobschmutzwanne 21, mittels welcher letztere in eine von dem Boden abgehobene, den das erste Fach 20 und das zweite Fach 52 umfassenden Schmutzfangraum dichtend abschließende Betriebsposition angehoben werden kann, ist in den Figuren 8 und 9 näher veranschaulicht. Ein etwa U-förmiger Bügel 68 ist an dem Korpus 4 um eine horizontale Schwenkachse 69 schwenkbar gelagert, wobei der mögliche Verschwenkwinkel durch zwei - jeweils eine Endlage definierende - Anschläge 70, 71 bestimmt ist. Die beiden Anschläge 70, 71 verfügen dabei jeweils über eine integrierte, mit dem Bügel 68 zusammenwirkende Klemmhaltung, welche eine Arretierung des Bügels 68 in der jeweiligen Endlage bewirken. An den beiden über die Schwenkachse 69 überstehenden freien Abschnitten 72 des Bügels 68 ist jeweils an nach innen abstehender stiftförmiger Mitnehmer 73 angeordnet. Diese Mitnehmer 73 greifen bei vollständig in den entsprechenden Freiraum 24 des Korpus' 4 eingefahrener Grobschmutzwanne 21 jeweils in eine zugeordnete Aussparung 74 eines zugeordneten, seitlich an der Grobschmutzwanne 21 vorgesehenen Gegenstücks 75 ein, so dass beim Verschwenken des Bügels 68 aus seiner in Fig. 8 dargestellten ersten Endlage in seine in Fig. 9 gezeigte zweite Endlage die Grobschmutzwanne 21 vom Boden abgehoben und so weit angehoben wird, bis ihr oberer Rand dichtend an einer korrespondierenden Struktur 76 des Korpus' 4 anliegt.

## Patentansprüche

1. Einrichtung zur Bearbeitung von Metall und Nichtmetall enthaltenden Werkstoffverbundwerkstücken, umfassend
- mindestens eine der Bearbeitung solcher Werkstoffverbundwerkstücke dienende, Metall und Nichtmetall enthaltende Späne oder sonstige Partikel absondernde Maschine (1) und
- eine Absaug- und Reinigungsvorrichtung (2) für mit derartigen Partikeln belastete Luft,
wobei die Absaug- und Reinigungsvorrichtung (2) ein Gebläse (7) und, für eine mehrstufige Reinigung der partikelbelasteten Luft im Vollstrom in strömungstechnischer Abfolge durchströmt, eine Zyklon-Abscheidestufe (12), mindestens zwei mechanische Filterstufen (26, 40, 53) und eine Aktivkohle-Filterstufe (68) umfasst,
**dadurch gekennzeichnet,**
**dass** die Zyklon-Abscheidestufe (12) mindestens ein Paket (13) aus mindestens drei, bevorzugt mindestens sechs strömungstechnisch zueinander parallel geschalteten Einzelzyklonen (14) aufweist, welche um einen sie über einen Verteilerstern (15) beaufschlagenden Zulauf (16) herum angeordnet sind, wobei die Einzelzyklone (14) nach oben gerichtete Auslässe für die gereinigte Luft aufweisen, und dass oberhalb der Auslässe der Einzelzyklone (14) eine erste (26) der mechanischen Filterstufen (26, 40, 53) den zugeordneten Zulauf (16) umgreifend angeordnet ist.

2. Einrichtung nach Anspruch 1, **dadurch gekennzeichnet, dass** die erste mechanische Filterstufe (26) eine C-förmige, eine seitwärts gerichtete Aussparung (32) aufweisende Filterscheibe (28) umfasst, wobei die Aussparung (32) der Filterscheibe (28) den zugeordneten Zulauf (16) aufnimmt.

3. Einrichtung nach Anspruch 2, **dadurch gekennzeichnet, dass** die erste mechanische Filterstufe (26) in einem Gehäuse (29) untergebracht ist, welches seinerseits eine seitwärts gerichtete Aussparung aufweist, wobei die Aussparung des Gehäuses (29) den zugeordneten Zulauf (16) aufnimmt.

4. Einrichtung nach einem der Ansprüche 1 bis 3, **dadurch gekennzeichnet, dass** die erste mechanische Filterstufe (26) in einem Gehäuse (29) untergebracht ist, welches benachbart zu einem Eintritt des zugeordneten Zulaufs (16) obere Ausströmöffnungen (35) sowie an seinem Umfang seitliche Ausströmöffnungen (36) aufweist.

5. Einrichtung nach einem der Ansprüche 1 bis 4, **dadurch gekennzeichnet, dass** neben einer die Zyklon-Abscheidestufe (12) und die erste mechanische Filterstufe (26) aufnehmenden ersten Kammer (37) eine zweite Kammer (39) angeordnet ist, welche eine der ersten mechanischen Filterstufe (26) strömungstechnisch nachgeschaltete zweite mechanische Filterstufe (40) aufnimmt.

6. Einrichtung nach Anspruch 5, **dadurch gekennzeichnet, dass** die zweite mechanische Filterstufe (40) mindestens einen radial von außen nach innen durchströmten Topffilter (45) mit nach oben weisendem Austritt (48) aufweist.

7. Einrichtung nach Anspruch 6, **dadurch gekennzeichnet, dass** der Topffilter (45) auf seiner Außenseite von einem Vorfiltermantel (51) umgeben ist.

8. Einrichtung nach Anspruch 7, **dadurch gekennzeichnet, dass** der Vorfiltermantel (51) mehrlagig aufgebaut ist, wobei er bevorzugt eine aus einem Filtervlies bestehende Lage (51a) und/oder eine aus einem Filterschaum bestehende Lage (51b) aufweist.

9. Einrichtung nach einem der Ansprüche 5 bis 8, **dadurch gekennzeichnet, dass** zwischen der ersten Kammer (37) und der zweiten Kammer (39) eine Trennwand (38) angeordnet ist, welche eine umströmte Kante mit einer scharfkantigen Strömungsumlenkung, bevorzugt einer mindestens 90° betragenden Strömungsumlenkung für die von der ersten Kammer (37) in die zweite Kammer (39) gelangenden Luftstrom (L) aufweist.

10. Einrichtung nach eine der Ansprüche 5 bis 9, **dadurch gekennzeichnet, dass** sich oberhalb der ersten Kammer (37) und der zweiten Kammer (39) eine der zweiten mechanischen Filterstufe (40) strömungstechnisch nachgeschaltete dritte mechanische Filterstufe (53) erstreckt.

11. Einrichtung nach einem der Ansprüche 1 bis 10, **dadurch gekennzeichnet, dass** das Gebläse (7) einen Antriebsmotor (10) umfasst, welcher in einem durch eine Wandung (66) begrenzten Einbauraum (67) untergebracht ist, wobei die Wandung (66) den Motor-Einbauraum (67) von einem mit Aktivkohle befüllten Raum des Aktivkohlefilters (64) abtrennt.

12. Einrichtung nach einem der Ansprüche 1 bis 11, **dadurch gekennzeichnet, dass** unterhalb der Einzelzyklone (14) eine Grobschmutzwanne (21) angeordnet ist.

13. Einrichtung nach Anspruch 12, **dadurch gekennzeichnet, dass** die Grobschmutzwanne (21) mit Rädern (R) ausgestattet ist, wobei zwischen einem Korpus (4) der Absaug- und Reinigungsvorrichtung (2) und der Grobschmutzwanne (21) eine dem Anheben und Absenken der Grobschmutzwanne (21) dienende Hubeinrichtung (23) wirkt.

## Claims

1. Installation for processing composite workpieces containing metal and non-metal, comprising
- at least one machine (1) for processing such composite workpieces, which emits chips or other particles containing metal and non-metal, and
- an extraction and cleaning device (2) for air contaminated with such particles,
wherein the extraction and cleaning device (2) has a blower (7) and, for multi-stage cleaning of the particle-laden air in full flow in a flow-related sequence, a cyclone separation stage (12), at least two mechanical filter stages (26, 40, 53) and an activated carbon filter stage (68),
**characterised in that**
the cyclone separation stage (12) has at least one package (13) of at least three, preferably at least six individual cyclones (14) connected in parallel with each other in terms of flow, which are arranged around an inlet (16) supplying them via a distributor star (15), wherein the individual cyclones (14) have upwardly directed outlets for the purified air, and that above the outlets of the individual cyclones (14), a first (26) of the mechanical filter stages (26, 40, 53) is arranged embracing the associated inlet (16).

2. Installation according to claim 1, **characterised in that** the first mechanical filter stage (26) comprises a C-shaped filter disc (28) with a sideways recess (32), wherein the recess (32) of the filter disc (28) accommodates the associated inlet (16).

3. Installation according to claim 2, **characterised in that** the first mechanical filter stage (26) is housed in a housing (29) which in turn has a sideways recess, the recess of the housing (29) receiving the associated inlet (16).

4. Installation according to one of claims 1 to 3, **characterised in that** the first mechanical filter stage (26) is housed in a housing (29) which has upper outlet openings (35) adjacent to an entrance of the associated inlet (16) and lateral outlet openings (36) on its circumference.

5. Installation according to one of claims 1 to 4, **characterised in that**, next to a first chamber (37) accommodating the cyclone separation stage (12) and the first mechanical filter stage (26), a second chamber (39) is arranged which accommodates a second mechanical filter stage (40) connected downstream to the first mechanical filter stage (26) in terms of flow.

6. Installation according to claim 5, **characterised in that** the second mechanical filter stage (40) has at least one pot filter (45) through which the flow passes radially from the outside to the inside and which has an upwardly directed outlet (48).

7. Installation according to claim 6, **characterised in that** the pot filter (45) is surrounded on its outer side by a pre-filter jacket (51).

8. Installation according to claim 7, **characterised in that** the pre-filter jacket (51) is multi-layered, preferably comprising a layer (51a) consisting of a filter fleece and/or a layer (51b) consisting of filter foam.

9. Installation according to one of claims 5 to 8, **characterised in that** that a partition wall (38) is arranged between the first chamber (37) and the second chamber (39), which has a flow-around edge with a sharp-edged flow deflection, preferably a flow deflection of at least 90° for the air flow (L) passing from the first chamber (37) into the second chamber (39).

10. Installation according to one of claims 5 to 9, **characterised in that** a third mechanical filter stage (53) is arranged above the first chamber (37) and the second chamber (39) and is connected downstream to the second mechanical filter stage (40) in terms of flow.

11. Installation according to one of claims 1 to 10, **characterised in** the blower (7) comprises a drive motor (10) which is accommodated in an installation space (67) bounded by a wall (66), the wall (66) separating the motor installation space (67) from a space of the activated carbon filter (64) filled with activated carbon.

12. Installation according to any of claims 1 to 11, **characterised in that** a coarse dirt tray (21) is arranged below the individual cyclones (14).

13. Installation according to claim 12, **characterised in that** the coarse dirt tray (21) is equipped with wheels (R), wherein a lifting device (23) for lifting and lowering the coarse dirt tray (21) acts between a body (4) of the extraction and cleaning device (2) and the coarse dirt tray (21).

## Revendications

1. Installation, destinée à usiner des pièces à usiner en matières composites contenant des métaux et des non-métaux, comprenant
- au moins une machine (1), servant à usiner de telles pièces à usiner en matières composites, séparant des copeaux contenant des métaux et des non-métaux ou d'autres particules et
- un dispositif (2) d'aspiration et d'épuration d'air chargé de telles particules,
le dispositif (2) d'aspiration et d'épuration comprenant un ventilateur (7) et pour une épuration en plusieurs étapes, l'air chargé de particules traversant en flux plein en séquence fluidique une étape de séparation cyclonique (12), au moins deux étapes de filtrage (26, 40, 53) mécanique et une étape de filtrage (68) au charbon actif,
**caractérisé en ce que**
l'étape de séparation cyclonique (12) comporte un pack (13) constitué d'au moins trois, de préférence d'au moins six cyclones (14) individuels montés fluidiquement à la parallèle les uns des autres, lesquels sont placés autour d'un afflux (16) soumis à une étoile de distribution (15), les cyclones (14) individuels comportant des sorties dirigées vers le haut pour l'air épuré et **en ce qu'**au-dessus des sorties des cyclones (14) individuels est placée une première (26) des étapes de filtrage (26, 40, 53) mécaniques entourant l'afflux (16) associé.

2. Installation selon la revendication 1, **caractérisée en ce que** la première étape de filtrage (26) mécanique comporte un disque de filtrage (28) en forme de C, comportant une encoche (32) orientée latéralement, l'encoche (32) du disque de filtrage (28) recevant l'afflux (16) associé.

3. Installation selon la revendication 2, **caractérisée en ce que** la première étape de filtrage (26) mécanique est logée dans un carter (29), qui pour sa part comporte une encoche orientée latéralement, l'encoche du carter (29) recevant l'afflux (16) associé.

4. Installation selon l'une quelconque des revendications 1 à 3, **caractérisée en ce que** la première étape de filtrage (26) mécanique est logée dans un carter (29), lequel comporte au voisinage d'une entrée de l'afflux (16) associé des sorties d'écoulement (35) supérieures, ainsi que sur sa périphérie des sorties d'écoulement (36) latérales.

5. Installation selon l'une quelconque des revendications 1 à 4, **caractérisée en ce qu'**à côté d'une première chambre (37) recevant l'étape de séparation cyclonique (12) et la première étape de filtrage (26) est placée une deuxième chambre (39) laquelle reçoit une deuxième étape de filtrage (40) mécanique fluidiquement placée en aval de la première étape de filtrage (26).

6. Installation selon la revendication 5, **caractérisée en ce que** la deuxième étape de filtrage (40) mécanique comporte au moins un filtre-pot (45), traversé de l'extérieur vers l'intérieur en direction radiale, doté d'une sortie (48) dirigée vers le haut.

7. Installation selon la revendication 6, **caractérisée en ce que** le filtre-pot (45) est entouré sur sa face extérieure par une enveloppe de préfiltrage (51).

8. Installation selon la revendication 7, **caractérisée en ce que** l'enveloppe de préfiltrage (51) est structurée en plusieurs couches, comportant de préférence une couche (51a) constituée de non-tissé filtrant et / ou une couche (51b) constituée d'une mousse filtrante.

9. Installation selon l'une quelconque des revendications 5 à 8, **caractérisée en ce qu'**entre la première chambre (37) et la deuxième chambre (39) est placée une paroi de séparation (38), laquelle comporte une arête entourée d'un flux, dotée d'une dérivation de flux à angle vif, de préférence d'une déviation de flux s'élevant à au moins 90 ° pour le flux d'air (L) arrivant de la première chambre (37) dans la deuxième chambre (39).

10. Installation selon l'une quelconque des revendications 5 à 9, **caractérisée en ce qu'**au-dessus de la première chambre (37) et de la deuxième chambre (39) s'étend une troisième étape de filtrage (53) montée en aval de la deuxième étape de filtrage (40).

11. Installation selon l'une quelconque des revendications 1 à 10, **caractérisée en ce que** le ventilateur (7) comprend un moteur d'entraînement (10), lequel est logé dans un espace de montage (67) délimité par une paroi (66), la paroi (66) séparant l'espace de montage (67) du moteur d'un espace rempli de charbon actif du filtre (64) au charbon actif.

12. Installation selon l'une quelconque des revendications 1 à 11, **caractérisée en ce qu'**en-dessous des cyclones (14) individuels est placée une cuve (21) à impuretés grossières.

13. Installation selon la revendication 12, **caractérisée en ce que** la cuve (21) à impuretés grossières est équipée de roues (R), entre un corps (4) du dispositif (2) d'aspiration et d'épuration et la cuve (21) à impuretés grossières agissant un dispositif de levage (23) servant à relever et à abaisser la cuve (21) à impuretés grossières.
